# EUROPEAN PATENT SPECIFICATION

(11) **EP 2 471 862 B1**
(45) Date of publication and mention of the grant of the patent: **27.05.2015**
(21) Application number: 10811458.8
(22) Date of filing: 10.08.2010
(51) Int. Cl.: C08L 27/06, C08K 3/26, C08K 5/053

(54) **VINYL CHLORIDE RESIN COMPOSITION FOR TRANSPARENT PRODUCTS**
VINYLCHLORIDHARZZUSAMMENSETZUNG FÜR TRANSPARENTE PRODUKTE
COMPOSITION DE RÉSINE DE CHLORURE DE VINYLE POUR DES PRODUITS TRANSPARENTS

(30) Priority: 24.08.2009 JP 2009192832
(43) Date of publication of application: 04.07.2012
(73) Proprietor: Adeka Corporation, Tokyo 116-0012 (JP)
(72) Inventor: ODAGIRI, Keiichi, Saitama-shi Saitama 336-0022 (JP); SENGOKU, Tadashi, Saitama-shi Saitama 336-0022 (JP)
(74) Representative: Raynor, Stuart Andrew
(86) International application number: PCT/JP2010/005016
(87) International publication number: WO 2011/024399

(56) References cited:
- EP-A1- 0 483 400
- JP-A- 2003 160 707
- JP-A- 2003 160 707
- JP-A- 2004 175 868
- JP-A- 2004 175 868
- JP-B2- 3 563 168
- US-A- 3 396 132
- US-A- 5 102 933

## Description

### TECHNICAL FIELD

The present invention relates to a vinyl chloride resin composition suitable for an application used as transparent products, and, for further detail, relates to a vinyl chloride resin composition for transparent products, which do not include heavy metal stabilizers, in particular tin stabilizers.

### BACKGROUND ART

A vinyl chloride resin, whose hardness can be easily adjusted by adding plasticizers, is used for various uses. In particular, since hard vinyl chloride resin compositions having no plasticizer, or semi-hard vinyl chloride resin compositions having a small amount of plasticizer have excellent rigidity, they are widely used for building materials or the like. Therefore, more advanced performance is required for the hard vinyl chloride resin compositions and the semi-hard vinyl chloride resin compositions, not only in working at high temperatures and pressures but also in thermal stability and weather resistance as molded articles.

Furthermore, hard transparent molded articles obtained from hard vinyl chloride resin compositions have ever been used for a wide range of products such as cases, industrial boards, decorative boards, film and sheets which are required to be the glass-like transparent products. On the contrary, vinyl chloride resin is insufficient in stability against light and heat. Therefore, deterioration caused mainly by de-hydrogen halide occurs easily when hot molding and processing are carried out or when the products are used, which is known as a disadvantage. In order to improve a disadvantage like this, attempts have been conventionally made wherein various stabilizers such as organic acid metallic salt, organic tin compound, organic phosphite compound, epoxy compound, β-diketone compound, antioxidant and ultraviolet absorber are blended to improve the stability of vinyl chloride resin.

Conventionally, heavy metal stabilizers such as lead and cadmium have been used from a superiority of cost performance or the like as the above stabilizer, since they are inexpensive. However, recently the interest in environment protection and environment conservation has been growing, therefore, the toxicity of the heavy metal or the like and negative effects on the environment have come to problems and there has been a tendency to use barium-zinc composite stabilizers. In addition, in recent years the effects of barium on the environment have started to cause concern. Therefore, the replacement to further lower-toxic calcium-zinc, magnesium-zinc or calcium-magnesium-zinc composite stabilizers is required.

From such viewpoints, a method for adding organic acid calcium salt, organic acid zinc salt, basic phosphorous acid salt and hydrotalcite compounds as a stabilizer (Patent document 1), and a method for adding organic acid alkaline earth metallic salt, organic acid zinc salt, basic zinc phosphate and hydrotalcite compounds as a stabilizer (Patent document 2) were proposed. However, when these compounds were used in combination, the performances of thermal resistance or the like were insufficient. In addition, there was no description concerning transparency in these patent documents at all, and there was no suggestion of improvement in transparency at all.

Furthermore, vinyl chloride resin foaming compositions for molded foams wherein an inorganic filler, a zinc compound, a zinc-modified hydrotalcite compound and a thermal decomposition type organic foaming agent are added (Patent document 3), and polyvinyl chloride resin compositions for food wrapping wherein a adipic acid ester plasticizer, a calcium salt of organic carboxyl acid and a zinc-modified hydrotalcite compound are blended (Patent document 4) are proposed. However, since there is no description concerning transparency at all in any of these documents, any knowledge concerning the improvement of transparency can be obtained from these documents.

On the contrary, tin stabilizers are proposed as a stabilizer which can enhance transparency (Patent documents 5 and 6) . However, tin is not preferable from the viewpoints of effects on the environment and toxicity as previously mentioned. Moreover, a lot of tin stabilizers are liquid. Therefore, in cases where these are used, not only lubricating properties of molten resin decrease during mold-processing, but also the thermal deformation temperature of molded object (a softening point) drops, which was a disadvantage.

Halogen-containing resin compositions especially suitable for wire covering material use are proposed wherein sugar alcohol is blended with a hydrotalcite compound (Patent document 7). However, it is described that hydrotalcite used here may be a natural product or a synthetic compound and there is no mention concerning zinc-modified hydrotalcite. In addition, as is obvious from considering the uses, not only there is no description in that it has transparency and simultaneously exerts a greater effect on coloring resistance, in particular thermal coloring resistance, but also the knowledge thereof can not be obtained.

Document JP 2004 175868 discloses a PVC composition comprising an alcohol according to present claim 1, a hydrotalcite which can be Zn modified and a metallic salt which can be a Zn salt.

### PRIOR ART DOCUMENTS

### PATENT DOCUMENTS

Patent document 1: Japanese Unexamined Patent Publication Tokkaihei 9-67489
Patent document 2: Japanese Unexamined Patent Publication Tokkai 2003-160707
Patent document 3: Japanese Unexamined Patent Publication Tokkaihei 3-237140
Patent document 4: Japanese Unexamined Patent Publication Tokkaihei 6-100749
Patent document 5: Japanese Unexamined Patent Publication Tokkaisho 62-4739
Patent document 6: Japanese Unexamined Patent Publication Tokkai 2008-1840
Patent document 7: Japanese Unexamined Patent Publication Tokkai 2004-175868

### SUMMARY OF THE INVENTION

### PROBLEMS TO BE SOLVED BY THE INVENTION

Therefore, the first object of the present invention is to provide a vinyl chloride resin composition for transparent products having high transparency, which is excellent in thermal resistance and coloring resistance, especially in thermal coloring resistance and does not contain heavy metal stabilizers such as lead, tin and barium.

The second object of the present invention is to provide a transparent molded product having high transparency, which is excellent in thermal resistance and coloring resistance, especially in thermal coloring resistance.

### MEANS TO SOLVE THE PROBLEMS

As a result of extensive studies toward attaining the above objects, inventors of the present invention have found that when organic acid zinc salts, zinc-modified hydrotalcite compound and at least one kind selected from a group of mannitol, maltitol and lactitol are combined to use as a stabilizer, a vinyl chloride resin composition excellent in transparency and stability can be obtained, even if a tin compound is not used, thereby achieving the present invention.

Namely, the present invention is the vinyl chloride resin composition for transparent products, comprising (A) 0.001~10 mass parts of at least one kind of organic acid zinc salts, (B) 0.001~10 mass parts of at least one kind of zinc-modified hydrotalcite compounds and (C) 0.001~1.0 mass parts of at least one kind of sugar alcohol selected from a group of mannitol, maltitol and lactitol relative to 100 mass parts of vinyl chloride resin; and a transparent molded product obtained by molding the said composition.

The zinc-modified hydrotalcite compound of the above (B) is a compound selected from the group consisting of
Mg_{0.38}Zn_{0.3}Al_{0.32} (OH)₂(CO₃)_{0.16}·0.2H₂O,
Mg_{0.45}Zn_{0.23}Al_{0.32}(OH)₂(CO₃)_{0.16},
Mg_{0.48}Zn_{0.18}Al_{0.34}(OH)₂(CO₃)_{0.17},
Mg_{0.48}Zn_{0.2}Al_{0.32}(OH)₂(CO₃)_{0.16},
Mg_{0.5}Zn_{0.17}Al_{0.33}(OH)₂(CO₃)_{0.165}·0.45H₂O,
Mg_{0.5}Zn_{0.18}Al_{0.32}(OH)₂(CO₃)_{0.16},
Mg_{0.5}Zn_{0.2}Al_{0.3}(OH)₂(CO₃)_{0.16},
Mg_{0.5}Zn_{0.2}Al_{0.3}(OH)₂(CO₃)_{0.15}·0.52H₂O,
Mg_{0.5}Zn_{0.25}Al_{0.25}(OH)₂(CO₃)_{0.125},
Mg_{0.51}Zn_{0.17}Al_{0.32}(OH)₂(CO₃)_{0.16},
Mg_{0.52}Zn_{0.16}Al_{0.32}(OH)₂(CO₃)_{0.16}·0.5H₂O,
Mg_{0.55}Zn_{0.15}Al_{0.32}(OH)₂(CO₃)_{0.15},
Mg_{0.6}Zn_{0.14}Al_{0.26}(OH)₂(CO₃)_{0.13},
Mg_{0.6}Zn_{0.16}Al_{0.24}(OH)₂(CO₃)_{0.12},
Mg_{0.6}Zn_{0.2}Al_{0.2}(OH)₂(CO₃)_{0.1},
Mg_{0.4}Ca_{0.1}Zn_{0.18}Al_{0.32}(OH)₂(CO₃)_{0.16},
Mg_{0.3}Ca_{0.2}Zn_{0.2}Al_{0.3}(OH)₂(CO₃)_{0.15},
Mg_{0.5}Zn_{0.17}Al_{0.33}(OH)₂(CO₃)_{0.17}·0.5H₂O,
Mg_{0.5}Zn_{0.17}Al_{0.33}(OH)₂(CO₃)₀.₁₇·0.42H₂O
Mg_{0.6}Zn_{0.16}Al_{0.24}(OH)₂(CO₃)_{0.12}·0.45H₂O,
Mg_{0.5}Zn_{0.25}Al_{0.25}(OH)₂(CO₃)_{0.13}·0.39H₂O,
Mg_{0.5}Zn_{0.17}Al_{0.33}(OH)₂(CO₃)_{0.17} and
Mg_{0.5}Zn_{0.25}Al_{0.25}(OH)₂(CO₃)_{0.13}.

In the present invention, an organic tin compound is not contained.

### EFFECT OF THE INVENTION

According to the present invention, the vinyl chloride resin composition for transparent products having high transparency can be obtained, which is excellent in thermal resistance and coloring resistance, especially in thermal coloring resistance. The vinyl chloride resin composition for transparent products of the present invention is suitable for obtaining molded products, which have high transparency and excellent thermal resistance and coloring resistance.

### EMBODIMENT FOR CARRYING OUT THE INVENTION

Hereafter, the vinyl chloride resin composition for transparent products of the present invention is described in detail. Examples of organic acid constituting an organic acid zinc salt of the component (A) used for the present invention are carboxylic acid, organic phosphoric acid or phenols. Furthermore, the said organic acid zinc salt may be any of acidic salts, basic salts or perbased salts.

Examples of the above carboxylic acid are caproic acid, caprylic acid, pelargonic acid, 2-ethylhexylic acid, capric acid, neodecanoic acid, undecylenic acid, lauric acid, myristic acid, palmitic acid, stearic acid, isostearic acid, 12-hydroxystearic acid, chlorostearic acid, 12-ketostearic acid, phenylstearic acid, ricinoleic acid, linoleic acid, linolenic acid, oleic acid, arachic acid, behenic acid, erucic acid, brassidic acid and similar acid, and also mixtures of naturally-produced acids such as tallow fatty acid, palm oil fatty acid, tung oil fatty acid, soybean oil fatty acid and cotton seed oil fatty acid; benzoic acid, p-tert-butylbenzoic acid, ethylbenzoic acid, isopropylbenzoic acid, toluic acid, xylic acid, salicylic acid, 5-tert-octylsalicylic acid, naphthenic acid and cyclohexanecarboxylic acid.

Examples of the above organic phosphoric acid are mono or dioctylphosphoric acid, mono or didodecylphosphoric acid, mono or dioctadecylphosphoric acid, mono or di-(nonylphenyl)phosphoric acid, phosphonic acid nonylphenyl ester and phosphonic acid stearyl ester or the like. Examples of the above phenols are phenol, cresol, ethylphenol, cyclohexylphenol, nonylphenol and dodecylphenol.

Regarding the organic acid zinc salts used as the component (A) in the present invention, only one kind of them may be used, or two or more kinds of them may be used together. In any case, it is preferable to use zinc salts of organic carboxylic acid in particular from the viewpoints of thermal stability and transparency of the composition of the present invention. The amount of the above organic acid zinc salts used as the component (A) is 0.001~10 mass parts relative to 100 mass parts of vinyl chloride resin, and 0.01~5 mass parts is preferable. If the said amount is less than 0.001 mass parts, coloring resistance and weather resistance are insufficient. If it exceeds 10 mass parts, thermal stability of the vinyl chloride resin composition deteriorates.

The zinc-modified hydrotalcite compound used as the component (B) in the present invention is a double salt compound having magnesium, zinc and aluminum as a metal component, or a double salt compound having magnesium, calcium, zinc and aluminum as a metal component. In the present invention, it is preferable to use a double salt compound having magnesium, zinc and aluminum as a metal component particularly from the viewpoint of transparency.

These double salt compounds can be obtained by treating hydrotalcite compounds using a zinc compound via the usual methods. The above hydrotalcite compounds may be zinc-modified hydrotalcite compounds obtained by treating or aftertreating by a zinc compound when synthesized. These zinc-modified hydrotalcite compounds are described in, for example, Japanese Unexamined Patent Publication Tokkosho 46-2280, Japanese Unexamined Patent Publication Tokkosho 47-32198, Japanese Unexamined Patent Publication Tokkosho 50-30039, Japanese Unexamined Patent Publication Tokkosho 48-29477 and Japanese Unexamined Patent Publication Tokkosho 51-29129 . As a matter of course, commercial products can be used in the present invention.

In the present invention, from the viewpoints of workability, thermal stability and transparency, the zinc-modified hydrotalcite compounds of the component (B) are selected from the group consisting of
Mg_{0.38}Zn_{0.3}Al_{0.32}(OH)₂(CO₃)_{0.16}·0.2H₂O,
Mg_{0.45}Zn_{0.23}Al_{0.32}(OH)₂(CO₃)_{0.16},
Mg_{0.48}Zn_{0.18}Al_{0.34}(OH)₂(CO₃)_{0.17},
Mg_{0.48}Zn_{0.2}Al_{0.32}(OH)₂(CO₃)_{0.16},
Mg_{0.5}Zn_{0.17}Al_{0.33}(OH)₂(CO₃)_{0.165}-0.45H₂O,
Mg_{0.52}Z_{n0.18}Al_{0.32}(OH)₂(CO₃)_{0.16},
Mg_{0.5}Zn_{0.2}Al_{0.3}(OH)₂(CO₃)_{0.16},
Mg_{0.5}Zn_{0.2}Al_{0.3}(OH)₂(CO₃)_{0.15}·0.52H₂O,
Mg_{0.5}Zn_{0.25}Al_{0.25}(OH)₂(CO₃)_{0.125},
Mg_{0.51}Zn_{0.17}Al_{0.32}(OH)₂(CO₃)_{0.15},
Mg_{0.52}Zn_{0.16}Al_{0.32}(OH)₂(CO₃)_{0.16}·0.5H₂O,
Mg_{0.5}Zn_{0.15}Al_{0.32}(OH)₂(CO₃)_{0.16},
Mg_{0.6}Zn_{0.14}Al_{0.26}(OH)₂(CO₃)_{0.13},
Mg_{0.6}Zn_{0.16}Al_{0.24}(OH)₂(CO₃)_{0.12},
Mg_{0.6}Zn_{0.2}Al_{0.2}(OH)₂(CO₃)_{0.1},
Mg_{0.4}Ca_{0.1}Zn_{0.18}Al_{0.32}(OH)₂(CO₃)_{0.16},
Mg_{0.3}Ca_{0.2}Zn_{0.2}Al_{0.3}(OH)₂(CO₃)_{0.15},
Mg_{0.5}Zn_{0.17}Al_{0.33}(OH)₂(CO₃)_{0.17}·0.5H₂O,
Mg_{0.5}Zn_{0.17}Al_{0.33}(OH)₂(CO₃)_{0.17}·0.42H₂O,
Mg_{0.6}Zn_{0.16}Al_{0.24}(OH)₂(CO₃)_{0.12}·0.45H₂O,
Mg_{0.5}Zn_{0.25}Al_{0.25}(OH)₂(CO₃)_{0.13}·0.39H₂O,
Mg_{0.5}Zn_{0.17}Al_{0.33}(OH)₂(CO₃)_{0.17}, and
Mg_{0.5}Zn_{0.25}Al_{0.25}(OH)₂(CO₃)_{0.130}.

In particular, it is preferable to use the Alkamizer 4 (Alkamizer P-93, name of product manufactured by Kyowa Chemical Industry Co., Ltd) from the viewpoint of transparency. In the present invention, only one kind of these zinc-modified hydrotalcite compounds may be used, or two or more kinds of them may be used together.

In the present invention, materials can also be used wherein the surfaces of the above zinc-modified hydrotalcite compounds are coated with higher fatty acids such as stearic acid, higher fatty acid metallic salts such as oleic acid alkali metallic salt, organic sulfonic acid metallic salts such as dodecylbenzenesulfonic acid alkali metallic salts, higher fatty acid amides, higher fatty acid esters, or waxes.

The amount of zinc-modified hydrotalcite compound of the component (B) used in the present invention is 0.001~10 mass parts relative to 100 mass parts of vinyl chloride resin, however, 0.05~5 mass parts is preferable. If the amount used is less than 0. 001 mass parts, the thermal stability of the resin composition is insufficient. If it exceeds 10 mass parts, performance, such as coloring resistance, of the resin composition becomes poor.

Next, mannitol, maltitol and lactitol of the component (C) in the present invention will be described. These mannitol (It is also called asnriannite.), maltitol and lactitol of the component (C) are sugar alcohol. As the component (C) in the present invention, one kind alone selected from among these may be used or two or more kinds of them may be used together.

The above mannitol is an optically active substance. In the present invention, any of D-mannitol, L-mannitol and DL-mannitol of racemic body can be used. From the viewpoints of greatness of effect obtained by the present invention and ready availability, it is preferable to use D-mannitol.

Furthermore, as for sugar alcohol, other than mannitol, maltitol and lactitol used as the component (C) in the present invention, not only sorbitol which is an isomer of mannitol, but also erythritol, glycerin, xylitol and inositol exist. However, even though sugar alcohols other than mannitol, maltitol and lactitol are used, effects of the present invention cannot be obtained.

In addition, even though, instead of the component (C), sugars which are precursors of sugar alcohols, such as xylose, sucrose, trehalose, fructose, maltose and lactose are used, effects of the present invention cannot be obtained.

Moreover, even though polyalcohol other than sugar alcohol, such as, diglycerin, trimethylolpropane, ditrimethylolpropane, neopentylglycol, pentaerythritol, dipentaerythtitol, tripentaerythritol, polypentaerythtitol and 1,3,5-tris(2-hydroxyethyl)isocyanurate are used, effects of the present invention can not be obtained.

The amount of the component (C) used in the present invention is 0.001~1.0 mass parts, preferably 0.005~0.5 mass parts relative to 100 mass parts of vinyl chloride resin. 0.01~0.3 mass parts is optimum. If the amount of the component (C) used is less than 0.001 mass parts, thermal stability, coloring resistance, especially thermal coloring resistance are insufficient. If it exceeds 1.0 mass parts, transparency is negatively affected.

It is preferable that the vinyl chloride resin composition for transparent products of the present invention further contains a lubricant from the viewpoint of workability.

The above lubricants can be selected suitably from publicly known lubricants. Examples of the publicly known lubricants are hydrocarbon lubricants such as low molecular weight wax, paraffin wax, polyethylene wax, chlorinated hydrocarbon and fluorocarbon; natural wax lubricants such as carnauba wax and candelilla wax; fatty acid lubricants such as a higher fatty acid like lauric acid, stearic acid and behenic acid, or an oxy-fatty acid like hydroxystearic acid; aliphatic amide lubricants such as aliphatic amide compounds like stearylamide, laurylamide and oleylamide, or alkylene bis aliphatic amide like methylenebisstearylamide and ethylenebisstearylamide; fatty acid alcohol ester lubricants such as fatty acid monovalent alcohol ester compounds like stearyl stearate and butyl stearate, or fatty acid polyalcohol ester compounds like glycerin tristearate, sorbitan tristearate, pentaerythritol tetrastearate, dipentaerythritol hexastearate, polyglycerin polyricinolate and cured castor oil, or complex ester compounds of monovalent fatty acids like adipic acid • stearic acid ester of dipentaerythritol, and polybasic organic acid with polyalcohol; fatty alcoholic lubricants such as stearyl alcohol, lauryl alcohol and palmityl alcohol; metallic soaps; a montanic acid lubricants such as partially saponified montanic acid ester; acrylic lubricant; and silicone oil. Only one kind of these lubricants may be used or two or more kinds of them may be used together.

In the present invention, it is preferable to use fatty acid alcohol ester lubricants such as complex ester compounds of monovalent fatty acid, and polybasic organic acid with polyalcohol, particularly from the viewpoint of transparency. It is preferable that the amount of the above lubricant used is 0.001~10 mass parts relative to 100 mass parts of polyvinyl chloride resin. In particular 0.05~5 mass parts is preferable. If the amount of lubricant is less than 0.001 mass parts, workability may be insufficient. If it exceeds 10 mass parts, performance such as transparency tends to get worse.

When the vinyl chloride resin composition for transparent products of the present invention is manufactured, the timing of blending the components (A)~(C), optionally added lubricants and other addition components with vinyl chloride resin is not limited in particular. For example, two or more kinds selected from the components (A)~(C), lubricants and other optional addition components may be combined into one pack and a mixture thereof may be blended with vinyl chloride resin. Or each component may be blended with vinyl chloride resin in series. In addition, in cases where combining into one pack is carried out, each component may be mixed after crushing respectively or may be crushed after mixing.

Examples of vinyl chloride resins used for the present invention are polyvinyl chloride, chlorinated polyvinyl chloride, polyvinylidene chloride, chlorinated polyethylene, chlorinated polypropylene, chlorinated rubber, vinyl chloride-vinyl acetate copolymer, vinyl chloride-ethylene copolymer, vinyl chloride-propylene copolymer, vinyl chloride-styrene copolymer, vinyl chloride-isobutylene copolymer, vinyl chloride-vinylidene chloride copolymer, vinyl chloride-styrene-maleic anhydride ternary copolymer; copolymers of vinyl chloride with alkyl, cycloalkyl or aryl maleimide; vinyl chloride resins such as vinyl chloride-styrene-acrylonitrile ternary copolymer, vinyl chloride-butadiene copolymer, vinyl chloride-isoprene copolymer, vinyl chloride-chlorinated propylene copolymer, vinyl chloride-vinylidene chloride-vinyl acetate ternary copolymer, vinyl chloride-acrylic acid ester copolymer, vinyl chloride-maleic acid ester copolymer, vinyl chloride-methacrylic acid ester copolymer, vinyl chloride-acrylonitrile copolymer and vinyl chloride-urethane copolymer; and blended articles of (1) the above vinyl chloride resins with (2) polyolefins and copolymers of thereof such as α-olefin polymers like polyethylene, polypropylene, polybutene and poly-3-methylbutene, ethylene-vinyl acetate copolymer or ethylenepropylene copolymer, (3)polystyrene, (4) acrylic resin, (5)copolymers of styrene with other monomers (for example, maleic anhydride, butadiene and acrylonitrile), (6)acrylonitrile-butadiene-styrene copolymer, (7)methacrylic acid ester-butadiene-styrene copolymer and (9)polyurethane.

Metallic stabilizers generally used for vinyl chloride resin can be added to the vinyl chloride resin composition for transparent products of the present invention. However, in the present invention, (organic) tin stabilizers are not used. It is also not preferable to add lead stabilizers, cadmium stabilizers and barium stabilizers from the viewpoints of negative effects on the environment and toxicity. Therefore, practically, examples of metallic stabilizers available in the present invention are metallic stabilizers other than lead, tin, cadmium and barium, organic acid metallic salts of these metals, and their composite stabilizers. These stabilizers can be optionally used within the range where the effects of the present invention are not negatively affected. However, in cases where these organic acid metallic salts are added, the transparency tends to decrease, which needs care.

Examples of organic acid metallic salts as the aforementioned metallic stabilizers available in the present invention are salts of carboxylic acid, organic phosphoric acid or phenol with metals (Li, Na, K, Ca, Mg, Sr, Zn, Cs and Al) or the like. Examples of the above carboxylic acid are, caproic acid, caprylic acid, pelargonic acid, 2-ethylhexylic acid, capric acid, neodecanoic acid, undecylenic acid, lauric acid, myristic acid, palmitic acid, stearic acid, isostearic acid, 12-hydroxystearic acid, chlorostearic acid, 12-ketostearic acid, phenylstearic acid, ricinoleic acid, linoleic acid, linolenic acid, oleic acid, arachidic acid, behenic acid, erucic acid, brassidic acid and similar acids; and also mixtures of naturally-produced acids such as tallow fatty acid, coconut oil fatty acid, tung oil fatty acid, soybean fatty acid and cotton seed oil fatty acid; benzoic acid, p-t-butylbenzoic acid, ethylbenzoic acid, isopropylbenzoic acid, toluic acid, xylic acid, salicylic acid, 5-t-octylsalicylic acid, naphthenic acid, or cyclohexanecarboxylic acid.

Examples of the aforementioned organic phosphoric acids are, mono- or di- octylphosphoric acid, mono- or didodecylphosphoric acid, mono- or di- octadecylphosphoric acid, mono-or di- (nonylphenyl) phosphoric acid, phosphonic acid nonylphenyl ester, or phosphonic acid stearyl ester.

Furthermore, examples of the aforementioned phenols are phenol, cresol, ethylphenol, cyclohexylphenol, nonylphenol and dodecylphenol. These may be normal salt, acid salt, basic salt or perbased complex.

It is preferable to use the vinyl chloride resin composition of the present invention as a hard resin composition including no plasticizers, since the said hard resin composition can provide molded products having excellent physical properties such as high transparency and a high softening point. However, it is possible to use 50 mass parts or less of plasticizer relative to 100 mass parts of vinyl chloride resin for semi-hard resin compositions. In cases where plasticizers are used, the plasticizers usually used for vinyl chloride resin can be suitably used within the range where the effects of the present invention are not negatively affected.

Examples of the aforementioned plasticizers are phthalate plasticizers such as dibutyl phthalate, butylhexyl phthalate, diheptyl phthalate, dioctyl phthalate, diisononyl phthalate, diisodecyl phthalate, dilauryl phthalate, dicyclohexyl phthalate and dioctyl terephthalate; adipate plasticizers such as dioctyl adipate, diisononyl adipate, diisodecyl adipate and di(butyldiglycol) adipate; phosphate plasticizers such as triphenyl phosphate, tricresyl phosphate, trixylenyl phosphate, tri(isopropylphenyl)phosphate, triethyl phosphate, tributyl phosphate, trioctyl phosphate, tri(butoxyethyl)phosphate and octyldiphenyl phosphate; polyester plasticizers using polyalcohols such as ethylene glycol, diethylene glycol, triethylene glycol, 1,2-propylene glycol, 1,3-propylene glycol, 1,3-butanediol, 1,4-butanediol, 1,5-hexanediol, 1, 6-hexanediol and neopentyl glycol, and dibasic acids such as oxalic acid, malonic acid, succinic acid, glutaric acid, adipic acid, pimelic acid, suberic acid, azelaic acid, sebacic acid, phthalic acid, isophthalic acid and terephthalic acid, if necessary, using monohydric alcohol or monocarboxylic acid as a stopper; as other examples, tetrahydrophthalic acid plasticizer, azelaic acid plasticizer, sebacic acid plasticizer, stearic acid plasticizer, citric acid plasticizer, trimellitic acid plasticizer, pyromellitic acid plasticizer and biphenylene polycarboxylic acid plasticizer.

In addition, various kinds of additive agents generally used as an additive agent for vinyl chloride resin, for example, an organic phosphite compound, a phenolic antioxidant or a sulfur antioxidant, a hydrotalcite compound other than the zinc-modified hydrotalcite compound of the component (B), an epoxy compound, polyols, a sugar alcohol other than the component (C), sugars, a β-diketone compound, an ultraviolet absorber, a hindered amine light stabilizer, a filler, a flame retardant and a flame-retardant auxiliary agent or the like can be added to the vinyl chloride resin composition for transparent products of the present invention within the range where the effects of the present invention are not negatively affected.

Examples of the aforementioned organic phosphite compound are triphenyl phosphite, tris(2,4-di-tert-butylphenyl)phosphite, tris(nonylphenyl)phosphite, tris(dinonylphenyl)phosphite, tris(mono, di-mixed nonylphenyl)phosphite, diphenyl acid phosphite, 2,2'-methylenebis(4,6-di-tert-butylphenyl)octyl phosphite, diphenyldecyl phosphite, phenyl diisodecyl phosphite, tributyl phosphite, tri(2-ethylhexyl) phosphite, tridecyl phosphite, trilauryl phosphite, dibutyl acid phosphite, dilauryl acid phosphite, trilauryl trithio phosphite, bis(neopentyl glycol)·1,4-cyclohexane dimethyl diphosphite, bis(2,4-di-tert-butylphenyl)pentaerythritol diphosphite, bis(2,6-di-tert-butyl-4-methylphenyl)pentaerythritol diphosphite, distearyl pentaerythritol diphosphite, phenyl-4,4'-isopropylidene diphenol • pentaerythritol diphosphite, tetra(C₁₂~C₁₅ mixed alkyl)-4,4'-isopropylidene diphenyl diphosphite, hydrogenated-4,4'-isopropylidene diphenol polyphosphite, bis(octylphenyl) · bis[4,4'-n-butylidene bis(2-tert-butyl-5-methylphenol)] · 1,6-hexanediol · diphosphite, tetratridecyl 4,4'-butylidene bis(2-tert-butyl-5-methylphenol)diphosphite, hexa(tridecyl) · 1,1,3-tris(2-methyl-5-tert-butyl -4-hydroxyphenyl)butane · triphosphite, 9,10-dihydro-9-oxa-10-phosphaphenanthrene-10-oxide and 2-butyl-2-ethylpropane diol · 2,4,6-tri-tert-butylphenol monophosphite.

Examples of the aforementioned phenolic antioxidant are 2,6-di-tert-butyl-p-cresol, 2,6-diphenyl-4-octadecyloxyphenol, stearyl(3,5-di-tert-butyl-4-hydroxyphenyl)-propionate, distearyl(3,5-di-tert-butyl-4-hydroxybenzyl)phosphonate, thiodiethylene glycol bis [(3,5-di-tert-butyl-4-hydroxyphenyl)propionate], 1,6-hexamethylenebis[(3,5-di-tert-butyl-4-hydroxyphenyl) propionate], 1,6-hexamethylenebis[(3,5-di-tert-butyl-4-hydroxyphenyl) propionic amide], 4,4'-thiobis(6-tert-butyl-m-cresol), 2,2'-methylenebis(4-methyl-6-tert-butylphenol), 2,2'-methylenebis(4-ethyl-6-tert-butylphenol), bis[3,3-bis(4-hydroxy-3-tert-butylphenyl)butylic acid]glycol ester, 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl]terephthalate, 1,3,5-tris(2,6-dimethyl-3-hydroxy-4-tert-butylbenzyl) isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl) propionyloxyethyl]isocyanurate, tetrakis[methylene-3-(3',5'-di-tert-butyl-4'-hydroxyphenyl) propionate]methane, 2-tert-butyl-4-methyl-6-(2-acryloyloxy-3-tert-butyl -5-methylbenzyl)phenol, 3,9-bis[1,1-dimethyl-2-{(3-tert-butyl-4-hydroxy-5 -methylphenyl)propionyloxy}ethyl]-2,4,8,10 -tetraoxaspiro[5,5]undecane and triethylene glycol bis[(3-tert-butyl-4-hydroxy-5-methylphenyl)propionate].

Examples of the aforementioned sulfur antioxidant are dialkyl thiodipropionates such as thiodipropionic acid dilauryl, dimyristyl, myristylstearyl or distearyl ester, and β-alkylmercapto propionic acid esters of polyol such as pentaerythritol tetra(β-dodecylmercapto propionate).

The compounds represented by the following formula, for example, can be cited as the hydrotalcite compound other than the zinc-modified hydrotalcite of the component (B), as described previously.
Mg₍₁₋ₓ₎Alₓ(OH)₂(A^{q-})_{x/q} ·ₐH₂O

In the formula, q is 1 or 2m, A^{q-} is an anion having the ionic valency of q, namely (CO₃)²⁻ or (ClO₄)⁻, X is 0<X≤0.5, a represents 0 or a positive number.

Representative examples of the hydrotalcite other than the zinc-modified hydrotalcite compound are as follows:
Mg_{0.750}Al_{0.250}(OH)₂(CO₃)_{0.125} · 0.5H₂O
Mg_{0.692}Al_{0.308}(OH)₂(CO₃)_{0.154} · 0.1H₂O
Mg_{0.683}Al_{0.317}(OH)₂(CO₃)_{0.159} · 0.5H₂O
Mg_{0.66}Al_{0.333}(OH)₂(CO₃)_{0.167} · 0.1H₂O
Mg_{0.750}Al_{0.250}(OH)₂(ClO₄)_{0.250} · 0.5H₂O
Mg_{0.692}Al_{0.308}(OH)₂(ClO₄)_{0.308} · 0.1H₂O
Mg_{0.667}Al_{0.333}(OH)₂(ClO₄)_{0.333} · 0.1H₂O

Examples of commercial products are DHT-4A (manufactured by Kyowa Chemical Industry Co., Ltd.), Magceler-1 (manufactured by Kyowa Chemical Industry Co., Ltd.).

Examples of the aforementioned epoxy compounds are epoxidized animal and plant oils such as epoxidized soybean oil, epoxidized linseed oil, epoxidized tung oil, epoxidized fish oil, epoxidized beef tallow oil, epoxidized castor oil and epoxidized safflower oil; epoxy compounds such as epoxidized methyl stearate, epoxidized butyl stearate, epoxidized 2-ethylhexyl stearate, epoxidized stearyl stearate, epoxidized polybutadiene, tris(epoxypropyl) isocyanurate, epoxidized tall oil fatty acid ester, epoxidized linseed oil fatty acid ester, bisphenol A diglycidyl ether, vinylcyclohexene diepoxide, dicyclohexene diepoxide, 3,4-epoxycyclohexylmethyl and epoxycyclohexane carboxylate.

Examples of the aforementioned polyol compounds are trimethylolpropane, ditrimethylolpropane, pentaerythritol, dipentaerythritol, polypentaerythritol, stearic acid half ester of pentaerythritol or dipentaerythritol, bis(dipentaerythritol)adipate, diglycerin and tris(2-hydroxyethyl)isocyanurate.

Examples of sugar alcohols other than the aforementioned component (C) are sorbitol, erythritol, glycerin, xylitol, xylose, sucrose, trehalose, inositol, fructose, maltose, lactose and erythritol.

Examples of the aforementioned β-diketone compounds are acetylacetone, triacetylmethane, 2,4,6-heptatrione, butanoyl acetylmethane, lauroyl acetylmethane, palmitoyl acetylmethane, stearoyl acetylmethane, phenylacetyl acetylmethane, dicyclohexylcarbonylmethane, benzoylformylmethane, benzoylacetylmethane, dibenzoylmethane, octylbenzoyl methane, stearoyl benzoyl methane, bis(4-octylbenzoyl) methane, benzoyl diacetyl methane, 4-methoxybenzoyl benzoyl methane, bis(4-carboxymethylbenzoyl)methane, 2-carboxymethyl benzoyl acetyl octyl methane, dehydroacetic acid, cyclohexane-1,3-dione, methyl 3,6-dimethyl-2,4-dioxy cyclohexane-1 carboxylate, 2-acetylcyclohexanone, dimedone and 2-benzoylcyclohexane. Furthermore, the metallic salt of these β-diketone compounds can also be used. Examples of metal species which can provide the above metallic salt of these β-diketone compounds are alkali metals such as lithium, sodium and potassium; magnesium, calcium, strontium, zinc and aluminum.

Examples of the aforementioned ultraviolet absorber are 2-hydroxybenzophenones such as 2,4-dihydroxybenzophenone, 2-hydroxy-4-methoxybenzophenone, 2-hydroxy-4-octoxybenzophenone and 5,5'-methylenebis(2-hydroxy-4-methoxybenzophenone); 2-(2-hydroxyphenyl)benzotriazoles such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylenebis(4-tert-octyl-6-benzotriazolyl)phenol and polyethylene glycol ester of 2-(2-hydroxy-3-tert-butyl-5-carboxyphenyl)benzotriazole; benzoates such as phenyl salicylate, resorcinol monobenzoate, 2,4-di-tert-butylphenyl-3,5-di-tert-butyl-4-hydroxybenzoate and hexadecyl-3,5-di-tert-butyl-4-hydroxybenzoate; substituted oxanilides such as 2-ethyl-2'-ethoxyoxanilide and 2-ethoxy-4'-dodecyloxanilide; cyanoacrylates such as ethyl-α-cyano-β,β-diphenylacrylate and methyl-2-cyano-3-methyl-3-(p-methoxyphenyl)acrylate.

Examples of the aforementioned hindered amine light stabilizer are hindered amine compounds such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-pentamethyl-4-piperidyl)sebacate, tetrakis(2,2,6,6-tetramethyl-4-piperidyl)butanetetra carboxylate, tetrakis(1,2,2,6,6-pentamethyl-4-piperidyl)butanetetra carboxylate, bis(1,2,2,6,6-pentamethyl-4-piperidyl) • di(tridecyl)-1,2,3,4-butanetetracarboxylate, bis(1,2,2,6,6-pentamethyl-4-piperidyl)-2-butyl-2-(3,5-di -tert-butyl-4-hydroxybenzyl)malonate, 1-(2-hydroxyethyl)-2,2,6,6-tetramethyl-4-piperidynol/ diethyl succinate polycondensation product, 1,6-bis(2,2,6,6-tetraethyl-4-piperidylamino)hexane/ dibromoethane polycondensation product, 1,6-bis(2,2,6,6-tetramethyl-4-piperidylamino)hexane/ 2, 4-dichloro-6-morpholino-s-triazine polycondensation product, 1,6-bis(2,2,6,6-tetramethyl-4-piperidylamino)hexane/2,4 -dichloro-6-tert-octylamino-s-triazine polycondensation product, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8,12-tetraazadodecane, 1,6,11-tris[2,4-bis(N-butyl-N-(2,2,6,6-tetramethyl-4-piperidyl)amino)-s-triazine-6-ylamino]undecane and 1,6,11-tris[2,4-bis(N-butyl-N-(1,2,2,6,6-pentamethyl-4-piperidyl)amino)-s-triazine-6-ylamino]undecane

Specific examples of the aforementioned fillers are calcium carbonate, calcium oxide, calcium hydroxide, zinc hydroxide, zinc carbonate, zinc sulfide, magnesium oxide, magnesium hydroxide, magnesium carbonate, aluminum oxide, aluminum hydroxide, alumina sodiumsilicate and hydrocalumite; metal silicates such as aluminum silicate, magnesium silicate, calcium silicate and zeolite; activated white clay, talc, clay, iron oxide red, asbestos, antimony trioxide, silica, glass beads, mica, sericite, glass flake, asbestos, wollastonite, potassium titanate, PMF, satinspar, zonolite, MOS, phosphate fiber, glass fiber, carbon fiber and aramid fiber.

Examples of the aforementioned flame retardants and flame-retardant auxiliary agents are a triazine ring-containing compound, metallic hydroxide, and also inorganic phosphorus, a halogen flame retardant, a silicone flame retardant, a phosphoric acid ester flame retardant, a condensed phosphoric acid ester flame retardant, an intumescent flame retardant, antimony oxide such as an antimony trioxide, other inorganic flame-retardant auxiliary agents and organic flame-retardant auxiliary agents.

Examples of the aforementioned triazine ring-containing compound are melamine, ammeline, benzoguanamine, acetoguanamine, phthalodiguanamine, melamine cyanurate, melamine pyrophosphate, butylenediguanamine, norbornenediguanamine, methylenediguanamine, ethylenedimelamine, trimethylenedimelamine, tetramethylenedimelamine, hexamethylenedimelamine and 1,3-hexylenedimelamine.

Examples of the aforementioned metal hydroxide are magnesium hydroxide, aluminum hydroxide, calcium hydroxide, barium hydroxide, zinc hydroxide and Kisuma 5A (commercial name of magnesium hydroxide: manufactured by Kyowa Chemical Industry Co., Ltd).

Examples of the aforementioned phosphoric acid ester flame retardant are trimethyl phosphate, triethyl phosphate, tributyl phosphate, tributoxyethyl phosphate, trischloroethyl phosphate, trisdichloropropyl phosphate, triphenyl phosphate, tricresyl phosphate, cresyl diphenyl phosphate, trixylenyl phosphate, octyldiphenyl phosphate, xylenyldiphenyl phosphate, trisisopropylphenyl phosphate, 2-ethylhexyldiphenyl phosphate, t-butylphenyldiphenyl phosphate, bis(t-butylphenyl)phenyl phosphate, tris(t-butylphenyl)phosphate, isopropylphenyldiphenyl phosphate, bis(isopropylphenyl)diphenylphosphate and tris(isopropylphenyl)phosphate.

Examples of the aforementioned condensation phosphoric acid ester flame retardant are 1,3-phenylene bis(diphenylphosphate), 1,3-phenylene bis(dixylenylphosphate) and bisphenol A bis(diphenylphosphate). Examples of the intumescent flame retardant are ammonium salt and amine salt of polyphosphoric acid.

Examples of the aforementioned other inorganic flame-retardant auxiliary agent are inorganic compounds such as titanium oxide, aluminum oxide, magnesium oxide and talc, and their surface-treated products. Examples of these inorganic flame-retardant auxiliary agents are various types of commercial products such as TIPAQUE R-680 (commercial name of titanium oxide manufactured by ISHIHARA SANGYO KABUSHIKIKAISHA, LTD.) and Kyowa MAG 150(commercial name of magnesium oxide manufactured by Kyowa Chemical Industry Co., Ltd).

Moreover, the example of the aforementioned other organic flame-retardant auxiliary agent is pentaerithritol.

Stabilization auxiliary agents generally used for vinyl chloride resins can be added to the vinyl chloride resin composition for transparent products of the present invention within the range where the effects of the present invention are not negatively affected. Examples of such stabilization auxiliary agents are diphenylthiourea, anilinodithiotriazine, melamine, benzoic acid, cinnamic acid, p-tert-butylbenzoic acid, zeolite and perchlorate.

Moreover, additives usually used for the vinyl chloride resin can be added to the vinyl chloride resin composition for transparent products of the present invention, if necessary, within the range where the effects of the present invention are not negatively affected. The examples of the said additives are crosslinking agents, antistatic agents, tarnish inhibitors, plate-out inhibitors, surface treatment agents, fluorescent agents, mildewcides, disinfectants, foaming agents, metal deactivators, mold lubricants, pigments, processing auxiliary agents, antioxidants and light stabilizers.

The vinyl chloride resin composition for transparent products of the present invention can be used without relation to the processing method for vinyl chloride resin. For example, it can be preferably used for roll process, extrusion molding process, meltdown casting method and pressure molding process.

Hereafter, the present invention will be explained further in detail using examples and comparative examples. However, the present invention should not be limited by these descriptions.

### [Examples 1~9 and Comparative Examples 1~29]

The mixture obtained by blending each component described in the following [Table 1] using the Henschel Mixer was kneaded for 3 minutes with a roll under the condition of 170°C×30rpm×0.6mm, then a sheet was manufactured. The surface of the roll after kneading was observed visually to carried out (the plate-out test) under the following evaluation condition. 0.6mm indicates a distance between rolls. The results were shown in [Table 1] .

The obtained sheets were put in the gear ovens at 190°C and 200°C to measure the blackening times (minute) respectively as (a thermal stability test). The results were shown in [Table 1].

Two 0.6mm thick sheets obtained as mentioned above were superposed each other and press processing was carried out for 5 minutes or 30 minutes at 190°C to prepare the sheets of 1mm thick respectively.

A coloring test and a transparency test were carried out using these sheets according to the following methods. The results were shown in Table 1.

In addition, as comparative examples, a composition wherein the component (C) is not blended, and compositions wherein sugar alcohol, sugars or polyalcohol described in Tables 2-4 were used as a comparative compound of the component (C), were prepared respectively. Then the comparative tests were carried out in the same manner as described previously. The results were shown in Tables 1-4.

### <Coloring Property Test>

The yellowness levels (Y.I.) of the aforementioned sheets having 1mm thick, which were obtained by performing press processing for 5 minutes or 30 minutes at 190°C, were measured. The results were shown in Table 1.

### <Transparency Test>

The Haze values of the aforementioned sheets having 1mm thick, which were obtained by performing press processing for 5 minutes at 190°C, were measured. The results were shown in Table 1.

### <Plate-out Test>

As described previously, regarding the surface of the roll after kneading, the extent of the plate-out was observed visually and evaluated based on the following standards.
○: No attached substances
Δ: A few attached substances
×: Lots of attached substances

**[Table 1]**

| | | | Examples | | | | | | | | | Comp. Examp. |
|---|---|---|---|---|---|---|---|---|---|---|---|---|
| | | | 1 | 2 | 3 | 4 | 5 | 6 | 7 | 8 | 9 | 1 |
| Vinyl chloride resin ^{*1} | | | 100 | 100 | 100 | 100 | 100 | 100 | 100 | 100 | 100 | 100 |
| Phenolic antioxidant ^{*2} | | | 0.1 | 0.1 | 0.1 | 0.1 | 0.1 | 0.1 | 0.1 | 0.1 | 0.1 | 0.1 |
| Dibenzoylmethane | | | 0.5 | 0.5 | 0.5 | 0.5 | 0.5 | 0.5 | 0.5 | 0.5 | 0.5 | 0.5 |
| Lubricant ^{*3} | | | 0.5 | 0.5 | 0.5 | 0.5 | 0.5 | 0.5 | 0.5 | 0.5 | 0.5 | 0.5 |
| Component (A) Zinc laurate | | | 0.3 | 0.3 | 0.3 | 0.3 | 0.3 | 0.3 | 0.3 | 0.3 | 0.3 | 0.3 |
| Component (B) Alkamizer P-93 ^{*4} | | | 2.7 | 2.7 | 2.7 | 2.7 | 2.7 | 2.7 | 2.7 | 2.7 | 2.7 | 2.7 |
| Component (C) | Mannitol *5 | | 0.02 | 0.05 | 0.1 | 0.3 | | | | | | |
| | Maltitol *6 | | | | | | 0.05 | 0.1 | 0.3 | | | |
| | Lactitol *7 | | | | | | | | | 0.05 | 0.3 | |
| Thermal stability (Blackening time: min.) | | 190°C | 180 | 180< | 180 | 165 | 180< | 180 | 180 | 180< | 180 | 120< |
| | | 200°C | 105 | 120 | 120 | 105 | 120 | 120 | 120 | 120 | 120 | 75 |
| Coloring property (Y.I.) | | 5 min. | 18.3 | 18 | 19.8 | 20 | 19.6 | 18.6 | 19.2 | 19.8 | 20.4 | 18 |
| | | 30 min. | 35.7 | 45.1 | 48.1 | 49 | 46.3 | 41.8 | 40.9 | 49.3 | 49.8 | 93.1 |
| Transparency Haze value (%) (1mm) | | | 4.45 | 5.44 | 7.1 | 7.5 | 6.23 | 6.34 | 7.44 | 6.21 | 6.52 | 5.31 |
| Plate-out | | | ○ | ○ | ○ | ○ | ○ | ○ | ○ | ○ | ○ | ○ |

| | | | | | | | | | | | | |
|---|---|---|---|---|---|---|---|---|---|---|---|---|
| (Using amount is expressed in terms of mass parts.) *1: ZEST 1000Z (Manufactured by Shin Dai-Ichi Vinylchloride Corporation.) *2:Tetrakis[methylene-3-(3',5'-di-tert-butyl-4' -hydroxyphenyl) propionate] methane *3: G-72 Polymer complex ester (Manufactured by Cognis Oleo Chemicals Japan Ltd..) *4: Zinc-modified hydrotalcite (Manufactured by Kyowa Chemical Industry Co., Ltd..) : Mg_{3.0}ZnAl₂ (OH)₁₂(CO₃) · 3H₂O Mg_{3/6}Zn_{1/6}Al_{2/6}(OH)₂(CO₃)_{1/6} · 0.5H₂O : expressed as Claim 2) *5: Marine Crystal (Manufactured by Mitsubishi Shoji Foodtech Co., Ltd.) *6: Crystal MABIT (manufactured by Hayashibara Shoji, Inc..) *7: Lactitol MC (manufactured by Danisco Japan Ltd..) | | | | | | | | | | | | |

**[Table 2]**

| | | | Comparative examples | | | | | | | | | |
|---|---|---|---|---|---|---|---|---|---|---|---|---|
| | | | 2 | 3 | 4 | 5 | 6 | 7 | 8 | 9 | 10 | 11 |
| Vinyl chloride resin ^{*1} | | | 100 | 100 | 100 | 100 | 100 | 100 | 100 | 100 | 100 | 100 |
| Phenolic antioxidant ^{*2} | | | 0.1 | 0.1 | 0.1 | 0.1 | 0.1 | 0.1 | 0.1 | 0.1 | 0.1 | 0.1 |
| Dibenzoylmethane | | | 0.5 | 0.5 | 0.5 | 0.5 | 0.5 | 0.5 | 0.5 | 0.5 | 0.5 | 0.5 |
| Lubricant ^{*3} | | | 0.5 | 0.5 | 0.5 | 0.5 | 0.5 | 0.5 | 0.5 | 0.5 | 0.5 | 0.5 |
| Component (A) Zinc laurate | | | 0.3 | 0.3 | 0.3 | 0.3 | 0.3 | 0.3 | 0.3 | 0.3 | 0.3 | 0.3 |
| Component (B) Alkamizer P-93 ^{*4} | | | 2.7 | 2.7 | 2.7 | 2.7 | 2.7 | 2.7 | 2.7 | 2.7 | 2.7 | 2.7 |
| Comparative compound | Sorbitol | | 0.05 | 0.3 | | | | | | | | |
| | Xylitol | | | | 0.05 | 0.3 | | | | | | |
| | Xylose | | | | | | 0.05 | 0.3 | | | | |
| | Erythritol | | | | | | | | 0.05 | 0.3 | | |
| | Inositol ^{*5} | | | | | | | | | | 0.05 | 0.3 |
| Thermal stability (Blackening time: minute) | | 190°C | 165 | 120 | 180 | 90 | 180 | 180 | 180 | 120 | 165 | 165 |
| | | 200°C | 90 | 60 | 90 | 45 | 90 | 105 | 90 | 60 | 105 | 120 |
| Coloring property (Y.I.) | | 5 minutes | 25.3 | 58.3 | 26.4 | 93.6 | 57.8 | 130 | 25.3 | 32.9 | 25.4 | 34.2 |
| | | 30 minutes | 77 | 117 | 96.1 | 160 | 81.6 | 132 | 97.1 | 79.5 | 80.1 | 96.7 |
| Transparency Haze value (%) (1mm) | | | 12.8 | 13.5 | 13.8 | 12 | 2.61 | 3.21 | 14 | 18.4 | 6.35 | 13.5 |
| Plate-out | | | ○ | ○ | ○ | × | ○ | × | ○ | × | ○ | Δ |

| | | | | | | | | | | | | |
|---|---|---|---|---|---|---|---|---|---|---|---|---|
| (Using amount is expressed in terms of mass parts) *1: ZEST 1000Z (Manufactured by Shin Dai-Ichi Vinyl Corporation.) *2:Tetrakis[methylene-3-(3',5'-di-tert-butyl -4'hydroxyphenyl) propionate] methane *3: G-72 (Polymer complex ester) (Manufactured by Cognis Oleo Chemicals Japan Ltd..) *4: Zinc-modified hydrotalcite (Manufactured by Kyowa Chemical Industry Co., Ltd.): Mg_{3.0}ZnAl₂(OH)₁₂(CO₃) · 3H₂O (Mg_{3/6}Zn_{1/6}Al_{2/6}(OH)₂(CO₃)_{1/6} · 0.5H₂O expressed as Claim 2) *5: The inositol used in Comparative examples 10 and 11 was not melted when kneaded by the roll, which results a poor dispersion. | | | | | | | | | | | | |

**[Table 3]**

| | | | Comparative examples | | | | | | | |
|---|---|---|---|---|---|---|---|---|---|---|
| | | | 12 | 13 | 14 | 15 | 16 | 17 | 18 | 19 |
| Vinyl chloride resin ^{*1} | | | 100 | 100 | 100 | 100 | 100 | 100 | 100 | 100 |
| Phenolic antioxidant ^{*2} | | | 0.1 | 0.1 | 0.1 | 0.1 | 0.1 | 0.1 | 0.1 | 0.1 |
| Dibenzoylmethane | | | 0.5 | 0.5 | 0.5 | 0.5 | 0.5 | 0.5 | 0.5 | 0.5 |
| Lubricant ^{*3} | | | 0.5 | 0.5 | 0.5 | 0.5 | 0.5 | 0.5 | 0.5 | 0.5 |
| Component (A) Zinc laurate | | | 0.3 | 0.3 | 0.3 | 0.3 | 0.3 | 0.3 | 0.3 | 0.3 |
| Component (B) Alkamizer P-93 ^{*4} | | | 2.7 | 2.7 | 2.7 | 2.7 | 2.7 | 2.7 | 2.7 | 2.7 |
| Comparative compound | Fructose | | 0.05 | 0.3 | | | | | | |
| | Maltose | | | | 0.05 | 0.3 | | | | |
| | Lactose | | | | | | 0.05 | 0.3 | | |
| | Glycerin | | | | | | | | 0.05 | 0.3 |
| Thermal stability (Blackening time: min.) | | 190°C | 180< | 180 | 180< | 180< | 165 | 180 | 135 | 105 |
| | | 200°C | 90 | 105 | 90 | 105 | 90 | 90 | 75 | 45 |
| Coloring property (Y.I.) | | 5 min. | 54.4 | 123 | 56.3 | 109 | 34.1 | 93.8 | 30.1 | 39.8 |
| | | 30 min. | 72.5 | 123. 9 | 72.4 | 114. 4 | 51.6 | 102. 5 | 109. 8 | 99.3 |
| Transparency Haze value (%) (1mm) | | | 3.13 | 3.42 | 3.07 | 2.48 | 3.84 | 6.56 | 16.7 | 11.4 |
| Plate-out | | | ○ | × | ○ | × | ○ | × | ○ | × |

| | | | | | | | | | | |
|---|---|---|---|---|---|---|---|---|---|---|
| (Using amount is expressed in terms of mass parts) *1: ZEST 1000Z (Manufactured by Shin Dai-Ichi Vinyl Corporation.) *2:Tetrakis[methylene-3-(3',5'-di-tert-butyl -4'hydroxyphenyl) propionate] methane *3: G-72 Polymer complex ester (Manufactured by Cognis Oleo Chemicals Japan Ltd.) *4: Zinc-modified hydrotalcite (Manufactured by Kyowa Chemical Industry Co., Ltd..) : Mg_{3.0}ZnAl₂ (OH)₁₂(CO₃) · 3H₂O (Mg_{3/6}Zn_{1/6}Al_{2/6}(OH)₂(CO₃)₁₆ · 0.5H₂O) : expressed as Claim 2) | | | | | | | | | | |

**[Table 4]**

| | | | Comparative examples | | | | | | | | | |
|---|---|---|---|---|---|---|---|---|---|---|---|---|
| | | | 20 | 21 | 22 | 23 | 24 | 25 | 26 | 27 | 28 | 29 |
| Vinyl chloride resin ^{*1} | | | 100 | 100 | 100 | 100 | 100 | 100 | 100 | 100 | 100 | 100 |
| Phenolic antioxidant ^{2*} | | | 0.1 | 0.1 | 0.1 | 0.1 | 0.1 | 0.1 | 0.1 | 0.1 | 0.1 | 0.1 |
| Dibenzoylmethane | | | 0.5 | 0.5 | 0.5 | 0.5 | 0.5 | 0.5 | 0.5 | 0.5 | 0.5 | 0.5 |
| Lubricant ^{*3} | | | 0.5 | 0.5 | 0.5 | 0.5 | 0.5 | 0.5 | 0.5 | 0.5 | 0.5 | 0.5 |
| Component (A) Zinc laurate | | | 0.3 | 0.3 | 0.3 | 0.3 | 0.3 | 0.3 | 0.3 | 0.3 | 0.3 | 0.3 |
| Component (B) Alkamizer P-93 ^{*4} | | | 2.7 | 2.7 | 2.7 | 2.7 | 2.7 | 2.7 | 2.7 | 2.7 | 2.7 | 2.7 |
| Comparative compound | Diglycerine | | 0.05 | 0.3 | | | | | | | | |
| | Triethylolpropane | | | | 0.05 | 0.3 | | | | | | |
| | Ditrimethylolpropane | | | | | | 0.05 | 0.3 | | | | |
| | Dipentaerythritol | | | | | | | | 0.05 | 0.3 | | |
| | THEIC ^{*5} | | | | | | | | | | 0.05 | 0.3 |
| Thermal stability (Blackening time: minute) | | 190°C | 135 | 105 | 165 | 120 | 150 | 120 | 165 | 120 | 150 | 120 |
| | | 200°C | 60 | 45 | 90 | 60 | 90 | 60 | 90 | 60 | 90 | 60 |
| Coloring property (Y.I.) | | 5 min. | 28.1 | 40.1 | 22.3 | 32 | 18.3 | 22.8 | 21.2 | 21.4 | 18.8 | 22.2 |
| | | 30 min. | 101.8 | 92.4 | 103.8 | 94.7 | 113.4 | 129.4 | 76.1 | 64 | 67.3 | 69.1 |
| Transparency Haze value (%) (1mm) | | | 15.9 | 11.2 | 10.5 | 14.3 | 5.13 | 9.18 | 6.37 | 12.8 | 4.79 | 6.54 |
| Plate-out | | | ○ | × | × | × | ○ | × | ○ | ○ | ○ | ○ |

| | | | | | | | | | | | | |
|---|---|---|---|---|---|---|---|---|---|---|---|---|
| (Using amount is expressed in terms of mass parts) *1: ZEST 1000Z (Manufactured by Shin Dai-Ichi Vinyl Corporation.) *2:Tetrakis[methylene-3-(3',5'-di-tert-butyl -4'hydroxyphenyl) propionate] methane *3: G-72 Polymer complex ester (Manufactured by Cognis Oleo Chemicals Japan Ltd..) *4: Zinc-modified hydrotalcite (Manufactured by Kyowa Chemical Industry Co., Ltd..): Mg_{3.0}ZnAl₂(OH)₁₂(CO₃) · 3H₂O (Mg_{3/6}Zn_{1/6}Al_{2/6}(OH)₂(CO₃)_{1/6} · 0.5H₂O) : expressed as Claim 2) *5: Tris(2-hydroxyethyl)isocyanurate | | | | | | | | | | | | |

As is clear from the results of the above Tables 1-4, it was found that both thermal stability (blackening time) and thermal coloring resistance (coloring, 30 minutes) are poorer than Examples 1-9 when the component (C) is not used (Comparative example 1).

In addition, in cases of Comparative examples 2-5, 8, 9, 11, 18 and 19, wherein sugar alcohol other than the component (C) was used, instead of the component (C) used in the present invention, it was found that not only transparency but also thermal stability (blackening time) and coloring resistance (coloring, 5 minutes, 30 minutes) were poor. In particular, it was identified that the plate-out occurred in cases of Comparative examples 5,9,11,13, 15 and 19.

In addition, in cases of Comparative examples 6, 7, 10 and 12-17, wherein sugar alcohol other than the component (C) was used, instead of the component (C) used in the present invention, or sugars that are precursors to sugar alcohol were used, instead of the component (C) used in the present invention, coloring resistance (coloring, 5 minutes, 30 minutes) was poor. In particular, it was identified that the plate-out occurred in cases of comparative examples 7, 13, 15 and 17.

In addition, in cases of comparative examples 20-23, 25 and 27 wherein polyalcohol was used instead of the component (C) used in the present invention, it was found that not only transparency was poor, but also thermal stability (blackening time) and coloring resistance (coloring, 5 minutes and 30 minutes) were poor. In particular, it was confirmed that in comparative examples 21,23 and 25, the plate out occurred.

Furthermore, in cases of comparative examples 24, 26,28 and 29 wherein polyalcohol was used instead of the component (C) used in the present invention, it was found that both thermal stability (blackening time) and coloring resistance (coloring, 5 minutes and 30 minutes) were poor.

Compared with these comparative examples, in cases of examples 1-9 of the present invention wherein mannitol, maltitol or lactitol were used as the component (C), in particular, effects superior in thermal stability (blackening time) and thermal coloring resistance (coloring, 30 minutes), maintaining transparency, were obtained without causing the plate out. These effects were not shown when sorbitol that is an isomer of mannitol was used (comparative examples 2 and 3). Therefore, it is clear that these effects are original ones of the present invention.

### INDUSTRIAL APPIICABILITY

The vinyl chloride resin composition for transparent products of the present invention can be used for transparent molded products requiring glass-like transparency. In particular, it is suitable for use in hard transparent molded products or semi-hard transparent molded products such as containers, industrial boards, decorative boards, trays, film, shrink film, sheets, building materials, pipes for water supply and drainage, plates, joints, materials for automobile, hoses, IC cases and bottles. Therefore, the vinyl chloride resin composition for transparent products of the present invention is extremely available in industrial application.

## Claims

1. A vinyl chloride resin composition for transparent products comprising (A) 0.001~10 mass parts of at least one kind of organic acid zinc salts, (B) 0.001~10 mass parts of at least one kind of zinc-modified hydrotalcite compounds and (C) 0.001~1.0 mass parts of at least one kind of sugar alcohol selected from a group consisting of mannitol, maltitol and lactitol, relative to 100 mass parts of vinyl chloride resin; wherein the composition does not contain organic tin compounds; wherein the zinc-modified hydrotalcite compound is selected from the group consisting of:
Mg_{0.38}Zn_{0.3}Al_{0.32}(OH)₂(CO₃)_{0.16}·0.2H₂O,
Mg_{0.45}Zn_{0.23}Al_{0.32}(OH)₂(CO₃)_{0.16},
Mg_{0.48}Zn_{0.18}Al_{0.34}(OH)₂(CO₃)_{0.17},
Mg_{0.48}Zn_{0.2}Al_{0.32}(OH)₂(CO₃)_{0.16},
Mg_{0.5}Zn_{0.17}Al_{0.33}(OH)₂(CO₃)_{0.165}·0.₄₅H₂O,
Mg_{0.5}Zn_{0.18}Al_{0.32}(OH)₂(CO₃)_{0.16},
Mg_{0.5}Z_{n0.2}Al_{0.3}(OH)₂(CO₃)_{0.16},
Mg_{0.5}Zn_{0.2}Al_{0.3}(OH)₂(CO₃)_{0.15}·0.52H₂O,
Mg_{0.5}Zn_{0.25}Al_{0.25}(OH)₂(CO₃)_{0.125},
Mg_{0.51}Zn_{0.17}Al_{0.32}(OH)₂(CO₃)_{0.16},
Mg_{0.52}Zn_{0.16}Al_{0.32}(OH)₂(CO₃)_{0.16}·0.5H₂O,
Mg_{0.55}Zn_{0.15}Al_{0.32}(OH)₂(CO₃)_{0.15},
Mg_{0.6}Zn_{0.14}Al_{0.26}(OH)₂(CO₃)_{0.13},
Mg_{0.6}Zn_{0.16}Al_{0.24}(OH)₂(CO₃)_{0.12},
Mg_{0.6}Zn_{0.2}Al_{0.2}(OH)₂(CO₃)_{0.1},
Mg_{0.4}Ca_{0.1}Zn_{0.18}Al_{0.32}(OH)₂(CO₃)_{0.16},
Mg_{0.3}Ca_{0.2}Zn_{0.2}Al_{0.3}(OH)₂₂(CO₃)_{0.15},
Mg_{0.5}Zn_{0.17}Al_{0.33}(OH)₂(CO₃)_{0.17}·0.5H₂O,
Mg_{0.6}Zn_{0.17}Al_{0.33}(OH)₂(CO₃)_{0.17}-0.42H₂O,
Mg_{0.6}Zn_{0.16}Al_{0.24}(OH)₂(CO₃)_{0.12}·0.45H₂O,
Mg_{0.5}Zn_{0.25}Al_{0.25}(OH)₂(CO)_{30.13}·0.39H₂O,
Mg_{0.5}Zn_{0.17}Al_{0.33}(OH)₂(CO₃)_{0.17} and
Mg_{0.5}Zn_{0.25}Al_{0.25} (OH) ₂ (CO₃) 0.13.

2. The vinyl chloride resin composition for transparent products described in Claim 1, wherein the composition does not comprise a lead stabiliser, a cadmium stabiliser or a barium stabiliser.

3. The vinyl chloride resin composition for transparent products described in Claim 1 or 2, wherein the above composition further contains at least one kind of stabilizers selected from a group consisting of metallic stabilizers, organic acid metallic salt of these metals and composite stabilizers thereof, wherein the metal are selected from the metals other than lead, tin, cadmium and barium.

4. The vinyl chloride resin composition for transparent products described in Claim 1, wherein the above composition contains at least one kind of lubricants selected from groups comprising hydrocarbon lubricant, natural wax lubricant, fatty acid lubricant, aliphatic amide lubricant, fatty acid alcohol ester lubricant, aliphatic alcohol lubricant, metal soaps, montanic acid lubricant; acrylic lubricants and silicone oil.

5. The vinyl chloride resin composition for transparent products described in Claim 4, wherein the amount of the above lubricant used is 0.001∼10 mass parts relative to 100 mass parts of vinyl chloride resin.

6. The vinyl chloride resin composition for transparent products described in Claim 1, wherein the above composition contains at least one kind of plasticizers selected from a group consisting of a phthalate plasticizer, an adipate plasticizer, a phosphate plasticizer, a polyester plasticizer, a tetrahydrophthalic plasticizer, an azelaic acid plasticizer, a sebacic acid plasticizer, a stearic acid plasticizer, a citric acid plasticizer, a trimellitic acid plasticizer, a pyromellitic acid plasticizer and a biphenylene polycarboxylic acid plasticizer.

7. The vinyl chloride resin composition for transparent products described in Claim 6, wherein the amount of the said plasticizer used is 50 mass parts or less relative to 100 mass parts of vinyl chloride resin.

8. The transparent molded products **characterized by** molding the vinyl chloride resin composition for transparent products described in any of claims 1 to 7.

## Patentansprüche

1. Vinylchloridharzzusammensetzung für transparente Produkte, umfassend (A) 0,001∼10 Masseteile von mindestens einer Art von Zinksalzen einer organischen Säure, (B) 0,001∼10 Masseteile von mindestens einer Art von zinkmodifizierten Hydrotalcitverbindungen und (C) 0,001∼10 Masseteile von mindestens einer Art von Zuckeralkohol, ausgewählt aus einer Gruppe, bestehend aus Mannitol, Maltitol und Lactitol, bezogen auf 100 Masseteile des Vinylchloridharzes; wobei die Zusammensetzung keine organischen Zinnverbindungen enthält; wobei die zinkmodifizierte Hydrotalcitverbindung ausgewählt ist aus der Gruppe, bestehend aus:
Mg_{0,38}Zn_{0,3}Al_{0,32}(OH)₂(CO₃)_{0,16}·0,2H₂O,
Mg_{0,45}Zn_{0,23}Al_{0,32}(OH)₂(CO₃)_{0,16},
Mg_{0,48}Zn_{0,18}Al_{0,34}(OH)₂(CO₃)₀,₁₇,
Mg_{0,48}Zn_{0,2}Al_{0,32}(OH)₂(CO₃)_{0,16},
Mg_{0,5}Zn_{0,17}Al_{0,33}(OH)₂(CO₃)_{0,165}·0,45H₂O,
Mg_{0,5}Zn_{0,18}Al_{0,32}(OH)₂(CO₃)_{0,16},
Mg_{0,5}Zn_{0,2}Al_{0,3}(OH)₂(CO₃)_{0,16},
Mg_{0,5}Zn_{0,2}Al_{0,3}(OH)₂(CO₃)_{0,15}·0,52H₂O,
Mg_{0,5}Zn_{0,25}Al0_{,25}(OH)₂(CO₃)_{0,125},
Mg_{0,51}Zn_{0,17}Al_{0,32}(OH)₂(CO₃)_{0,16},
Mg₀₅₂Zn_{0,16}Al_{0,32}(OH)₂(CO₃)_{0,16}·0,5H₂O,
Mg_{0,55}Zn_{0,15}Al_{0,32}(OH)₂(CO₃)_{0,15},
Mg_{0,6}Zn_{0,14}Al_{0,26}(OH)₂(CO₃)_{0,13},
Mg_{0,6}Zn_{0,16}Al_{0,24}(OH)₂(CO₃)_{0,12},
Mg_{0,6}Zn_{0,2}Al_{0,2}(OH)₂(CO₃)₀,₁,
Mg_{0,4}Ca_{0,1}Zn_{0,18}Al_{0,32}(OH)₂(CO₃)_{0,16},
Mg_{0,3}Ca_{0,2}Zn_{0,2}Al_{0,3}(OH)₂(CO₃)_{0,15},
Mg_{0,5}Zn_{0,17}Al_{0,33}(OH)₂(CO₃)_{0,17}·0,5d₂O,
Mg_{0,5}Zn_{0,17}Al_{0,33}(OH)₂(CO₃)_{0,17}·0,42H₂O,
Mg_{0,6}Zn_{0,16}Al_{0,24}(OH)₂(CO₃)_{0,12}·0,45H₂O,
Mg_{0,s}Zn_{0,25}Al_{0,25}(OH)₂(CO₃)_{0,13}·0,39H₂O,
Mg_{0,5}Zn_{0,17}Al_{0,33}(OH)₂(CO₃)_{0,17} und
Mg_{0,5}Zn_{0,25}Al_{0,25}(OH)₂(CO₃)_{0,13}.

2. Vinylchloridharzzusammensetzung für transparente Produkte nach Anspruch 1, wobei die Zusammensetzung keinen Bleistabilisator, Cadmiumstabilisator oder Bariumstabilisator enthält.

3. Vinylchloridharzzusammensetzung für transparente Produkte nach Anspruch 1 oder 2, wobei die Zusammensetzung des Weiteren mindestens eine Art von Stabilisatoren enthält, ausgewählt aus der Gruppe, bestehend aus metallischen Stabilisatoren, Metallsalzen einer organischen Säure dieser Metalle und Verbundstabilisatoren davon, wobei das Metall ausgewählt ist aus den von Blei, Zinn, Cadmium und Barium verschiedenen Metallen.

4. Vinylchloridharzzusammensetzung für transparente Produkte nach Anspruch 1, wobei die Zusammensetzung mindestens eine Art von Gleitmittel enthält, ausgewählt aus den Gruppen, umfassend Kohlenwasserstoffgleitmittel, Naturwachsgleitmittel, Fettsäuregleitmittel, aliphatische Amidgleitmittel, Fettsäurealkoholestergleitmittel, aliphatische Alkoholgleitmittel, Metallseifen, Montansäuregleitmittel; Acrylgleitmittel und Siliconöl.

5. Vinylchloridharzzusammensetzung für transparente Produkte nach Anspruch 4, wobei die Menge des verwendeten Gleitmittels 0,001-10 Masseteile, bezogen auf 100 Masseteile des Vinylchloridharzes, beträgt.

6. Vinylchloridharzzusammensetzung für transparente Produkte nach Anspruch 1, wobei die Zusammensetzung mindestens eine Art von Weichmacher enthält, ausgewählt aus einer Gruppe, bestehend aus einem Phthalatweichmacher, einem Adipatweichmacher, einem Phosphatweichmacher, einem Polyesterweichmacher, einem Tetrahydrophthalsäureweichmacher, einem Azelainsäureweichmacher, einem Sebacinsäureweichmacher, einem Stearinsäureweichmacher, einem Citronensäureweichmacher, einem Trimellitsäureweichmacher, einem Pyromellitsäureweichmacher und einem Biphenylenpolycarbonsäureweichmacher.

7. Vinylchloridharzzusammensetzung für transparente Produkte nach Anspruch 6, wobei die Menge des verwendeten Weichmachers 50 Masseteile oder weniger, bezogen auf 100 Masseteile des Vinylchloridharzes, beträgt.

8. Transparente geformte Produkte, **gekennzeichnet durch** das Formen der Vinylchloridharzzusammensetzung für transparente Produkte nach einem der Ansprüche 1 bis 7.

## Revendications

1. Composition de résine de chlorure de vinyle pour produits transparents, comprenant, pour 100 parties en masse de résine de chlorure de vinyle :
A) de 0,001 à 10 parties en masse d'au moins un sel de zinc et d'acide organique,
B) de 0,001 à 10 parties en masse d'au moins un composé de type hydrotalcite modifiée au zinc,
C) et de 0,001 à 1,0 partie en masse d'au moins un alcool de sucre, choisi dans l'ensemble constitué par le mannitol, le maltitol et le lactitol,
laquelle composition ne contient pas de composés organiques de l'étain, et dans laquelle le composé de type hydrotalcite modifiée au zinc est choisi dans l'ensemble constitué par les suivants :
- Mg_{0,38}Zn_{0,3}Al_{0,32}(OH)₂(CO₃)₀,_{16·}0,2H₂O
- Mg_{0,45}Zn_{0,23}Al_{0,32}(OH)₂(CO₃)_{0,16}
- Mg_{0,48}Zn_{0,18}Al_{0,34}(OH)₂(CO₃)_{0,17}
- Mg_{0,48}Zn_{0,2}Al_{0,32}(OH)₂(CO₃)_{0,16}
- Mg_{0,5}Zn_{0,17}Al_{0,33}(OH)₂(CO₃)_{0,165}·0,45H₂O
- Mg_{0,5}Zn_{0,18}Al_{0,32}(OH)₂(CO₃)_{0,16}
- Mg_{0,5}Zn_{0,2}Al_{0,3}(OH)₂(CO₃)_{0,16}
- Mg_{0,5}Zn_{0,2}Al_{0,3}(OH)₂(CO₃)_{0,15}·0,52H₂O
- Mg_{0,5}Zn_{0,25}Al_{0,25}(OH)₂(CO₃)_{0,125}
- Mg_{0,51}Zn_{0,17}Al_{0,32}(OH)₂(CO₃)_{0,16}
- Mg_{0,52}Zn_{0,16}Al_{0,32}(OH)₂(CO₃)_{0,16}·0,5H₂O
- Mg_{0,55}Zn₀,₁₅Al_{0,32}(OH)₂(CO₃)_{0,15}
- Mg_{0,6}Zn_{0,14}Al_{0,26}(OH)₂(CO₃)_{0,13}
- Mg_{0,6}Zn_{0,16}Al_{0,24}(OH)₂(CO₃)_{0,12}
- Mg_{0,6}Zn_{0,2}Al_{0,2}(OH)₂(CO₃)_{0,1}
- Mg_{0,4}Ca_{0,1}Zn_{0,18}Al_{0,32}(OH)₂(CO₃)_{0,16}
- Mg_{0,3}Ca_{0,2}Zn_{0,2}Al_{0,3}(OH)₂(CO₃)_{0,15}
- Mg_{0,5}Zn_{0,17}Al_{0,33}(OH)₂(CO₃)_{0,17}·0,5H₂O
- Mg_{0,5}Zn_{0,17}Al_{0,33}(OH)₂(CO₃)_{0,17}·0,42H₂O
- Mg_{0,6}Zn_{0,16}Al_{0,24}(OH)₂(CO₃)_{0,12}·0,45H₂O
- Mg_{0,5}Zn_{0,25}Al_{0,25}(OH)₂(CO₃)_{0,13}·0,39H₂O
- Mg_{0,5}Zn_{0,17}Al_{0,33}(OH)₂(CO₃)_{0,17}
- et Mg_{0,5}Zn_{0,25}Al_{0,25}(OH)₂(CO₃)_{0,13}.

2. Composition de résine de chlorure de vinyle pour produits transparents, conforme à la revendication 1, laquelle composition ne comprend pas de stabilisant au plomb, de stabilisant au cadmium ou de stabilisant au baryum.

3. Composition de résine de chlorure de vinyle pour produits transparents, conforme à la revendication 1 ou 2, laquelle composition comprend au moins un stabilisant choisi dans l'ensemble constitué par les stabilisants à base de métal, les sels d'acide organique et de métal, et les stabilisants composites formés à partir de ceux-ci, étant entendu que le métal est choisi parmi les métaux autres que les plomb, étain, cadmium et baryum.

4. Composition de résine de chlorure de vinyle pour produits transparents, conforme à la revendication 1, laquelle composition comprend au moins un lubrifiant choisi dans l'ensemble constitué par les suivants : lubrifiants de type hydrocarbure, lubrifiants de type cire naturelle, lubrifiants de type acide gras, lubrifiants de type amide aliphatique, lubrifiants de type ester d'alcool et d'acide gras, lubrifiants de type alcool aliphatique, savons métalliques, lubrifiants de type acide montanique, lubrifiants acryliques, et huiles de silicone.

5. Composition de résine de chlorure de vinyle pour produits transparents, conforme à la revendication 4, dans laquelle ledit lubrifiant est utilisé en une quantité de 0,001 à 10 parties en masse pour 100 parties en masse de la résine de chlorure de vinyle.

6. Composition de résine de chlorure de vinyle pour produits transparents, conforme à la revendication 1, laquelle composition comprend au moins un plastifiant choisi dans l'ensemble constitué par les suivants : plastifiants de type phtalate, plastifiants de type adipate, plastifiants de type phosphate, plastifiants de type polyester, plastifiants de type tétrahydrophtalique, plastifiants à base d'acide azélaïque, plastifiants à base d'acide sébacique, plastifiants à base d'acide stéarique, plastifiants à base d'acide citrique, plastifiants à base d'acide trimellitique, plastifiants à base d'acide pyromellitique, et plastifiants à base d'un acide biphénylène-polycarboxylique.

7. Composition de résine de chlorure de vinyle pour produits transparents, conforme à la revendication 6, dans laquelle ledit plastifiant est utilisé en une quantité inférieure ou égale à 50 parties en masse pour 100 parties en masse de la résine de chlorure de vinyle.

8. Articles moulés transparents, **caractérisés en ce que** ce sont des produits de moulage d'une composition de résine de chlorure de vinyle pour produits transparents, conforme à l'une des revendications 1 à 7.
